(19) Europäisches Patentamt
European Patent Office
Office européen des brevets

(11) **EP 3 462 600 A1**

(12) **EUROPÄISCHE PATENTANMELDUNG**

(43) Veröffentlichungstag:
03.04.2019   Patentblatt 2019/14

(51) Int Cl.:
*H02P 21/12* *(2016.01)*     *H02P 21/02* *(2006.01)*
*H02P 21/00* *(2016.01)*

(21) Anmeldenummer: 17194133.9

(22) Anmeldetag: 29.09.2017

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder: **Nemeth-Csoka, Mihaly**
**91056 Erlangen (DE)**

(54) **ENERGIEEFFIZIENTE ASYNCHRONMASCHINE**

(57)     Bei einem Verfahren zur Ermittlung eines Flusses (4) einer Asynchronmaschine (1), wird der Fluss (4) in Abhängigkeit eines Verlustes (7) der Asynchronmaschine (1) eingestellt. Demnach ist eine Vorrichtung zur Bestimmung des Flusses (4) der Asynchronmaschine (1), mit einem Modell (5) zur Berechnung eines Verlustes (7) der Asynchronmaschine (1) abhängig vom Fluss der Asynchronmaschine und mit einer Auswahleinrichtung (8) zur Auswahl eines Flusses (7) abhängig vom Verlust vorgesehen.

FIG 3

**Beschreibung**

Die Erfindung betrifft eine Asynchronmaschine. Asynchronmaschinen können in einem Betriebspunkt oder in verschiedenen Betriebspunkten betrieben werden. Hierfür sind verschiedene Steuerungen bzw. Regelungen vorsehbar.

Für die Steuerung und/oder Regelung der Asynchronmaschine sind verschiedenste Konzepte bekannt.

Die EP 0 019 138 B1 zeigt ein Verfahren zur Regelung einer umrichtergespeisten Asynchronmaschine. Aus der Regelabweichung zwischen einem vorgegebenen Drehzahl-Sollwert und einem Ersatz-Istwert wird ohne Erfassung der Läuferdrehzahl eine einem Soll-Wirkstrom entsprechende Stromsteuergröße gebildet. Die Amplitude des Umrichter-Ausgangsstromes wird entsprechend der Amplitude eines aus dem Soll-Wirkstrom und einem vorgegebenen Fluss entsprechenden Soll-Magnetisierungsstrom gebildeten Soll-Ständerstromes geregelt. Aus Istwerten von Ständerstrom und Ständerspannung werden die Istwerte des Wirkstromes und des Flussbetrages berechnet und daraus wird als Quotient eine Lastzustandsgröße gebildet die in stationären Betrieb dem Tangens des Lastwinkels entspricht. Die Frequenz des Umrichter-Ausgangsstromes wird mit einer Frequenzsteuergröße gesteuert, die aus der Regelabweichung des Istwertes und eines aus der Stromsteuergröße gebildeten Sollwertes der Lastzustandsgröße gebildet wird. Als Ersatz-Istwert wird die Frequenzsteuergröße verwendet.

Aus der WO 2005/018086 A1 ist ein Verfahren zur gesteuerten Einprägung eines Ständerstrom-Sollwertes und eines Drehmoment-Sollwertes für eine stromrichtergespeiste Drehfeldmaschine bekannt, wobei in Abhängigkeit eines vorbestimmten Rotorfluss-Sollwertes und eines ermittelten Rotorfluss-Istwertes eine feldbildende Stromkomponente des Ständerstrom-Sollwertes und in Abhängigkeit eines vorbestimmten Drehmoment-Sollwertes, des ermittelten Rotorfluss-Istwertes und einer ermittelten drehmomentbildenden Stromkomponente eines gemessenen Ständerstromes eine drehmomentbildende Stromkomponente des Ständerstrom-Sollwertes berechnet werden, wobei in Abhängigkeit einer ermittelten Rotorschlupffrequenz und einer Kreisfrequenz ein Ständerkreisfrequenz-Istwert bestimmt wird, wobei aus diesen berechneten Werten in Abhängigkeit der Parameter frequenzabhängige Streuinduktivität und Ständerwiderstand als Stellgröße das Integral der Ständerspannung berechnet wird, aus dem eine aus abgespeicherten offline optimierten Flussbahnkurven ausgewählte Flussbahnkurve abgeleitet wird.

Auch aus der DE 41 38 066 B4 ist eine weitere feldorientierte Regelung bekannt. Die Struktur der feldorientierten Regelung ist entscheidend für die Genauigkeit des Wirkstrom-Istwertes und des Flusses $\Psi$ und somit auch für die Genauigkeit des Adaptionsverfahrens. Zur Verbesserung der Genauigkeit kann ein Läufertemperaturmodell verwendet werden.

Aus der DE 195 24 654 A1 ist ein Verfahren zur geberlosen feldorientierten Regelung einer Asynchronmaschine bekannt. Hier wird ein Maschinenmodell verwendet um Schätzwerte z.B. für den Ständerwiderstand zu bilden.

Aus der EP 0 771 067 B1 ist der Einsatz eines weiteren Temperaturmodells für einen Läuferwiderstand bekannt.

Bei Asynchronmaschinen wird zunehmend gefordert, diese energieeffizient zu betreiben. Eine Aufgabe der Erfindung ist es die Regelung und/oder Steuerung einer Asynchronmaschine zu verbessern. Dadurch ist es möglich die Asynchronmaschine effizienter zu betreiben.

Eine Lösung der Aufgabe ergibt sich nach einem Verfahren zur Ermittlung eines Flusses einer Asynchronmaschine nach Anspruch 1 bzw. gemäß einer Vorrichtung zur Bestimmung eines Flusses einer Asynchronmaschine, nach Anspruch 10. Damit ergibt sich auch eine Lösung der Aufgabe durch ein Verfahren zur Regelung einer Asynchronmaschine, bei welchem das Verfahren zur Ermittlung des Flusses der Asynchronmaschine verwendet wird. Dieses Verfahren dient insbesondere zur Minimierung des Verlustes der Asynchronmaschine und/oder der Optimierung des Wirkungsgrades der Asynchronmaschine.

Asynchronmaschinen können im Spannungsstellbereich mit dem Nennfluss der Asynchronmaschine betrieben werden. Ein vorgegebener Lastzustand (festes Drehmoment und feste Drehzahl) kann aber auch mit einem anderen Flussbetrag erreicht werden. Der Flussbetrag ist in einem Bereich von etwa 50% bis 120% (je nach Lastzustand) frei wählbar. Dieser Freiheitsgrad kann zur Optimierungen, z.B. zur Wirkungsgradoptimierung eingesetzt werden.

Bei einem Verfahren zur Ermittlung eines Flusses einer Asynchronmaschine, wird der Fluss in Abhängigkeit eines Verlustes der Asynchronmaschine eingestellt. So kann der Wirkungsgrad der Asynchronmaschine durch eine Verkleinerung/Minimierung des Verlustes der Asynchronmaschine verbessert/optimiert werden (Verlustoptimierung).

Bei einer Asynchronmaschine gibt es verschiedene Bereiche, welche für den Verlust von Relevanz sein können. Diese Bereiche sind beispielsweise ohmsche Verluste im Ständer, ohmsche Verluste im Rotor, Eisenverluste, mechanische Verluste, etc.

Zu den mechanischen Verlusten zählen Reibungsverluste wie Verluste in einem Lager. Auch Ventilationsverluste, welche bei einer Kühlung auftreten können, tragen zu den Gesamtverlusten bei. Bei eigenbelüfteten Maschinen ändert sich der Leistungsbedarf proportional zur dritten Potenz der Drehzahl. Strömungsverluste, die durch Luftwirbel zwischen Ständer und Rotor auftreten, können auch Berücksichtigung finden, sind aber in der Regel klein und damit ggf. auch vernachlässigbar.

Bei einer Bestimmung der Verlustleistung kann man zwischen einer direkten und einer indirekten Bestimmung der Verlustleistung unterscheiden. Bei der direkten Bestimmung werden die Verlustarten durch gezielte Messungen erfasst. Bei einer indirekten Messung werden Eingangs- und Ausgangsleistungen definiert. Die Verlustleistung wird als Unterschied definiert. Da es sich bei dieser Differenzbildung um zwei etwa gleich große Größen handelt, sind die Einzelleistungen $P_{in}$ und $P_{out}$ recht genau zu bestimmen, um die Verlustleistung $P_v$ in einer genügenden Genauigkeit zu erhalten: $P_v = P_{in} - P_{out}$. Obwohl die mechanischen Verluste zum Teil sehr relevant sind, spielen sie bei der Energieoptimierung durch den Umrichter dennoch keine Rolle, weil ein durch Drehzahl und Drehmoment festgelegter Arbeitspunkt keinen freien Spielraum lässt. Die Reduzierung dieser Verlustart ist durch konstruktive Maßnahmen z.B. Fremdbelüftung möglich.

Alle Arten von Verlusten, die nicht einzeln berücksichtigt sind, werden als "Zusatzverluste" beschrieben, wie z.B. in DIN EN 60034-2-1 definiert.

In einer Ausgestaltung des Verfahrens wird der Verlust mittels eines Modells ermittelt. Das Modell berücksichtigt insbesondere Verluste im Motor, also in der elektrischen Maschine. Dies sind insbesondere ohmsche Verluste, ohmsche Verluste im Ständer der elektrischen Maschine und/oder ohmsche Verluste im Rotor der elektrischen Maschine. Auch Eisenverluste sind Verluste der elektrischen Maschine, welche im Modell berücksichtigt werden können. Da die Rotorfrequenz im stationären Zustand vergleichsweise gering ist, können die Grundschwingungseisenverluste im Rotor gegenüber denen im Ständer praktisch vernachlässigt werden. Im Umrichterbetrieb sind die Eisenverluste wegen des signifikanten harmonischen Anteils (Strom, Spannung) höher als im Netzbetrieb. In einem Ersatzschaltbild für die elektrische Maschine kann z.B. der Eisenverlust durch einen Widerstand parallel zur Hauptinduktivität berücksichtigt werden. Im Modell können auch Hystereseverluste mit berücksichtigt werden. Die Hystereseverluste können die Eisenverluste im Spannungsstellbereich dominieren. Sie ergeben sich wie folgt:

$$P_h = k_h * f * \psi^2 \quad .$$

Im Modell können auch Wirbelstromverluste mit berücksichtigt werden. Die Wirbelstromverluste können die Eisenverluste im Feldschwächenbereich dominieren. Sie ergeben sich wie folgt:

$$P_w = k_w * f^2 * \psi^2 \quad .$$

In einer Ausgestaltung des Verfahrens weist das Modell der elektrischen Maschine ein thermisches Modell auf. Zumindest ein Teil der Verluste in der Asynchronmaschine ist mit dem thermischen Motormodell berechenbar. Das thermische Modell kann auch für den Motorschutz und eine Widerstandsadaption verwendet werden. Die Berechnung des thermischen Modells wird in einer Ausgestaltung (auch) für die Wirkungsgradoptimierung eingesetzt.

In einer Ausgestaltung des Verfahrens werden die ohmschen Verluste berücksichtigt. Die ohmschen Verluste sind proportional zu dem Quadrat des Stromes und linear abhängig von dem Widerstand des Leiters. Dieser Widerstandswert ist temperaturabhängig und diese Abhängigkeit kann im Regelfall nicht vernachlässigt werden:

$$R_\vartheta = R_{20°C} * (1 + \alpha * \Delta T)$$

wobei der Faktor $\alpha$ materialabhängig ist.

Bei Kupfer ist der Wert $0,0039\frac{1}{K}$, bei Aluminium $0,004\frac{1}{K}$.

Es gilt die Faustregel, dass bei 100 K Temperaturerhöhung etwa 40% Widerstandserhöhung zu erwarten ist. Bei den Grundschwingungsfrequenzen im stationären Zustand spielt die Stromverdrängung oft keine besonders wichtige Rolle. Beim Umrichterbetrieb sind die Oberschwingungen in den Strömen und die dadurch verursachten ohmschen Verluste wegen der reduzierten Eindringtiefe aber nicht mehr zu vernachlässigen. Die Ersatzwiderstände für die n-ten Harmonischen $R_n$ können z.B. wiefolgt modelliert werden, wobei n die Ordnungszahl der entsprechenden Harmonischen und f die Frequenz der Harmonische (bezogen auf die Nennfrequenz) ist:

$$R_n = R_{s,DC} * (1 + k_n * f_n^{0.5}).$$

Die Parameter $k_n$ können mit der Finite-Elemente-Methode gewonnen werden. Die ohmschen Verluste im Ständer errechnen sich gemäß:

$$P_{s,Cu} = 3 * R_s * I\_s^2.$$

Bei der Messung von $R_s$ (Ständerwiderstand) ist darauf zu achten, dass der eventuell mitgemessene Kabelwiderstand zwar bei der Regelung zu berücksichtigen ist, sich aber nicht so temperaturabhängig ändert, wie der Widerstand der Ständerwicklung. Bei den ohmschen Verlusten im Ständer ist anzumerken, dass dazu sowohl die Längskomponente $i_d$ des Stroms als auch die entsprechende Querkomponente iq etwas beitragen. Ohmsche Verluste im Rotor (Läufer) sind gemäß der Gleichung

$$P_{r,Cu} = 3 * R_r * I\_r^2$$

berechenbar. Bei unter transienten Zuständen auftretenden Rotorfrequenzen sind die von Stromverdrängung verursachten Widerstandsänderungen eventuell nicht vernachlässigbar.

In einer Ausgestaltung des Verfahrens wird der Fluss (magnetische Fluss der elektrischen Maschine) bei einem minimalen Verlust eingestellt. Der Fluss wird also so gewählt, dass der Verlust minimal ist. Hierzu wird ein Modell der elektrischen Maschine verwendet, mit dem eine Berechnung des Verlustes möglich ist. Dies betrifft insbesondere nur einen Teil des Gesamtverlustes der elektrischen Maschine.

In einer Ausgestaltung des Verfahrens wird ein Längsstrom $I_d$ der elektrischen Maschine ungleich einem Querstrom $I_q$ der elektrischen Maschine eingestellt. Dies rührt aus der Erkenntniss, dass mit einer Bedingung $I_q=I_d$ in der Regel noch nicht der optimalste Betriebspunkt der elektrischen Maschine erzielbar ist.

In einer Ausgestaltung des Verfahrens wird der Wirkungsgrad der elektrischen Maschine optimiert. Zur Optimierung wird mittels eines Modells ein Verlust, z.B. ein ohmscher Verlust, welcher von der Temperatur abhängig ist, der elektrischen Maschine in einem Modell errechnet. Abhängig vom im Modell gewählten Fluss ändert sich der errechnete Verlust. An der elektrischen Maschine wird der Fluss eingestellt, welcher im Modell den geringsten Verlust ergab.

In einer Ausgestaltung des Verfahrens unterscheidet sich der Strombetrag beim eingestellten Fluss vom minimalen Strombetrag. Ergibt sich eine derartige Situation wird klar, dass ein optimaler effizienter Betrieb der elektrischen Maschine auch dann erreicht werden kann, wenn ein Fluss gewählt wird, bei dem der Strombetrag nicht minimal ist.

In einer Ausgestaltung des Verfahrens kann die Einstellung des Flusses lastunabhängig und/oder lastabhängig erfolgen. Aus einem vorgegebenen Lastzustand (gegeben durch Drehmoment und/oder Drehzahl) und dem bekannten Flussbetrag wird in einer Ausgestaltung des Verfahrens die aktuelle Verlustleitung berechnet. Dann wird für den gleichen Lastzustand bei einem angenommen etwas (z.B. etwa 5%) kleineren und einem größeren Flussbetrag die Verlustleistung berechnet. Die Differenzen zwischen den Flussbeträgen, welche zur Berechnung der Verlustleistung herangezogen werden, können sich auch in einem Band von 1% und 10% bewegen, bzw. aus diesem ausgewählt werden. Der Prozentsatz kann auch abhängig vom Betriebszustand der elektrischen Maschine gewählt werden. Aus den drei Verlustwerten (bei kleinerem Fluss, bei aktuellem Fluss, bei größerem Fluss) wird insbesondere durch parabolische Annäherung eine minimale Verlustleistung berechnet. Der zur minimalen Verlustleitung gehörige Fluss wird als optimaler Fluss eingestellt. Das Verfahren kann weitere Iterationsschritte aufweisen.

In einer Ausgestaltung des Verfahrens wird eine Änderung des Verlustes abhängig von einer Änderung des Flusses errechnet, wobei der Fluss in Abhängigkeit des errechneten Verlustes eingestellt wird. Dies kann als schnelles und stabiles Verfahren realisiert werden. Der Fluss wird insbesondere so eingestellt, dass der Wirkungsgrad den messtechnisch maximal erreichbaren Wert erreicht. Das Verfahren kann ohne eine Iteration durchgeführt werden. Wegen der direkten Berechnung (ohne Iteration) ist das Verfahren schneller und zuverlässiger als ein iteratives Verfahren. Eine Berücksichtigung des Eisenverlustes (welcher immerhin 15 bis 25% des Nennverlustes ausmachen kann und bei einem Verfahren welche die Bedingung $I_d=I_q$ berücksichtigt komplett vernachlässigt wird) ermöglicht die verbesserte, insbesondere maximale, Wirkungsgradoptimierung.

Das Verfahren ist nach den beschriebenen Ausgestaltungen insbesondere direkt, schnell und zuverlässig. Insbesondere werden dafür keine neuen Motorparameter benötigt, die bereits bekannten und vorhandenen Parameter sind ausreichend. Eine bislang vielleicht schon vorhandene Motordatenbank muss nicht erweitert werden. Das beschriebene Verfahren zur Ermittlung des Flusses der elektrischen Maschine für deren Optimierung, benötigt wenig Rechenzeit ist kostengünstig realisierbar.

Eine Lösung der Aufgabe gelingt auch mittels einer Vorrichtung. Die Vorrichtung zur Bestimmung eines Flusses einer Asynchronmaschine weist ein Modell zur Berechnung eines Verlustes der Asynchronmaschine abhängig vom Fluss der Asynchronmaschine auf und eine Auswahleinrichtung zur Auswahl eines Flusses abhängig vom Verlust. Es ist der Fluss auszuwählen bei dem der Verlust im Vergleich am kleinsten ist.

In einer Ausgestaltung der Vorrichtung weist diese eine Aktivierungseinrichtung für die Vorrichtung auf. Damit ist eine Aktivierung abhängig von der Lastdynamik der Asynchronmaschine möglich.

In einer Ausgestaltung der Vorrichtung ist diese in einen Stromrichter integriert. So können Motordaten, die in dem Stromrichter gespeichert sind, mit verwendet werden. So kann auch die Rechenleistung des Stromrichters, welche zur Regelung der elektrischen Maschine vorhanden ist, mit genutzt werden.

Mittels der Vorrichtung kann eines der beschriebenen Verfahren durchgeführt werden, bzw. kann bei einem der Verfahren die Vorrichtung verwendet werden.

In einer Ausgestaltung werden bei einem energieoptimalen Betrieb der Asynchronmaschine Sättigungen und Eisenverluste bei der Berechnung des Sollwertes für den Fluss berücksichtigt.

Die Erfindung wird nachfolgend auf der Basis von Ausführungsbeispielen unter Bezugnahme auf die beiliegende Zeichnungen exemplarisch weiter erläutert, wobei gleichartige Elemente die gleichen Bezugszeichen aufweisen. Dabei zeigt:

FIG 1    eine Abhängigkeit des Wirkungsgrades einer Asynchronmaschine von einer Vorgabe des Flusses;
FIG 2    Beispiele für eine Verlustermittlung;
FIG 3    eine Asynchronmaschine mit einem Stromrichter;
FIG 4    Messwerte für Drehzahl, Strom und Motortemperatur;
FIG 5    Messwerte für den Fluss und eine errechnete Verlustleistung und
FIG 6    einen Vergleich verschiedener Optimierungen der Asynchronmaschine.

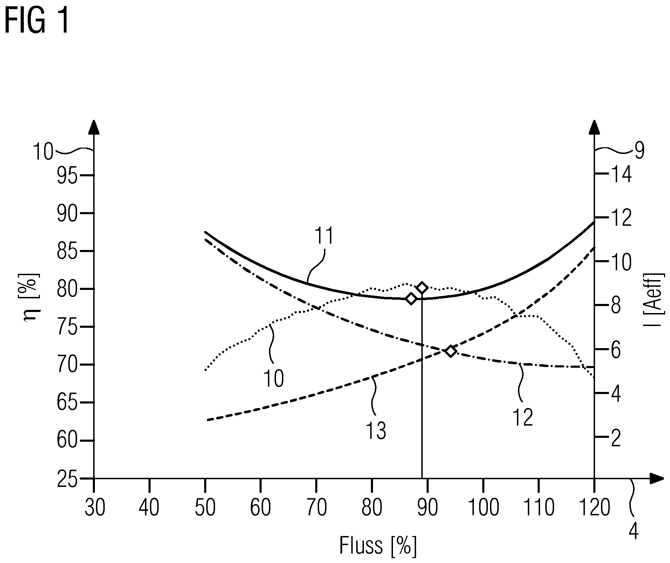

Die Darstellung nach FIG 1 zeigt ein Diagramm, welches bei einer Asynchronmaschine beispielhaft die Abhängigkeit des Wirkungsgrades 10 vom Fluss $\psi$ 4 zeigt. Dargestellt ist ferner bezüglich einer Achse 9 für den Strom (I[$A_{eff}$]) eine Kurve 11 für den Strombetrag I, eine Kurve 12 für den Querstromsollwert $I_{q\,soll}$ und eine Kurve 13 für den Sollwert der d-Komponenten des Stroms $I_{d\,soll}$. Der Schnittpunkt der Kurve 12 mit der Kurve 13 ist bei einem Wert für den Fluss 4, welcher größer ist als der Wert für den Fluss 4 beim Maximum der Kurve 10 für den Wirkungsgrad etwa ($\eta$). Das Minimum der Kurve 11 für den Strombetrag ist bei einem Wert für den Fluss 4, welcher kleiner ist als der Wert für den Fluss 4 beim Maximum der Kurve 10 für den Wirkungsgrad etwa ($\eta$). Dies zeigt, dass als eine Bedingung für die Einstellung des Flusses 4 zur Erreichung des maximalen Wirkungsgrad (Maximum der Kurve 10) noch verbesserbar ist und besser sein kann, als die Bedingungen Minimum des Strombetrages 11 oder Schnittpunkt der Kurven 12 und 13 ($I_{q\,soll} = I_{d\,soll}$).

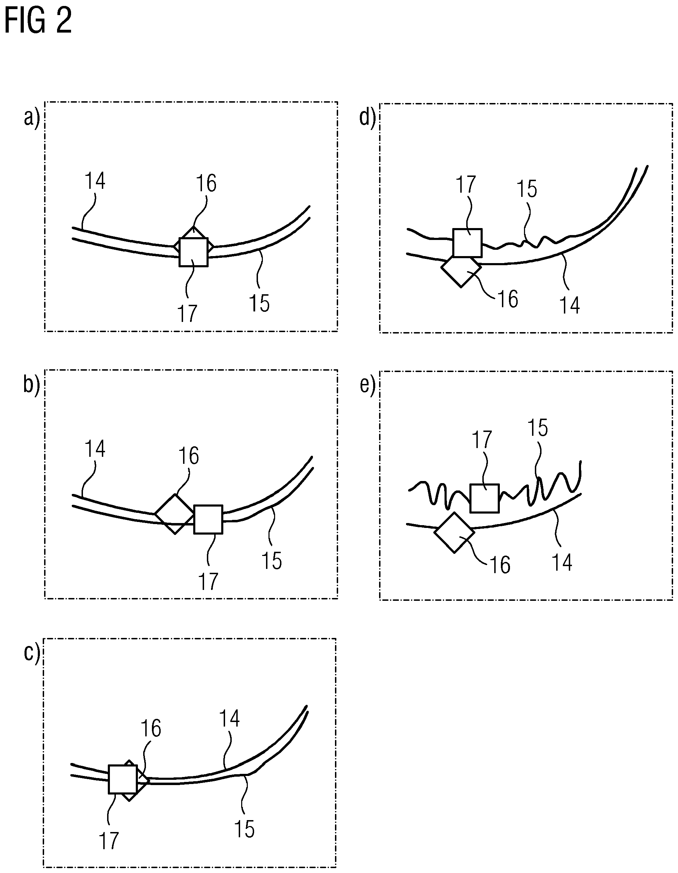

Die Darstellung nach FIG 2 zeigt Beispiele a) bis e) für die Verlustermittlung bei verschiedenen stationären Betriebszuständen einer Asynchronmaschine. Gezeigt sind eine Kurve 14 mit einer errechneten Verlustleistung, insbesondere dem Gesamtverlust und eine Kurve 15 mit einer Differenz aus gemessener Wirkleistung minus gemessener mechanischer Leistung. Die Kurve 14 weist jeweils ein Minium 16 auf, welches durch eine Raute gekennzeichnet ist. Die Kurve 15 weist jeweils ein Minimum 17 auf, welches durch ein Quadrat gekennzeichnet ist. Gezeigt ist jeweils die Abhängigkeit vom Fluss. Es zeigt sich, dass das Minimum der Kurve 15 stets in der Nähe des Minimums der Kurve 14 ist. Zur Optimierung der Asynchronmaschine wird somit ein Fluss gewählt, bei welchem der berechnete Verlust (die berechnete Verlustleistung) minimal ist.

Der Flussbetrag legt durch die Sättigungskennlinie den Wert für $I_{d\,soll}$ (i_sd) fest. Der Wert $I_{q\,soll}$ (i_sq) kann aus Flussbetrag und Drehmoment berechnet werden. Der Schlupf ergibt sich aus dem Rotorwiderstand, dem Querstrom und dem Flussbetrag. Damit ergibt sich auch die Ständerfrequenz. Damit sind alle Größen für ein thermisches Motormodell bekannt und die Motorverluste können eindeutig berechnet werden. Damit können sich folgende Gleichungen ergeben:

```
        i_sq = k_t * Psi * m        Querstrom


    i_sd = f(Psi)              Erregerstrom (Sättigungskennlinie
                              (bei Inbetriebnahme gemessen)


     is^2 = i_sd^2 + i_sq^2                 Ständerstrom


     f_r = * R_r * i_sq / Psi / 2 / pi      Rotorfrequenz


     f_s = Zp * n + f_r                     Statorfrequenz
```

Mit:

- Flussbetrag Psi
- Drehzahl n
- Drehmoment m
- Drehmomentfaktor K_t
- Statorwiderstand (thermisch adaptiert) R_s
- Rotorwiderstand (thermisch adaptiert) R_r
- Polpaarzahl Z_p

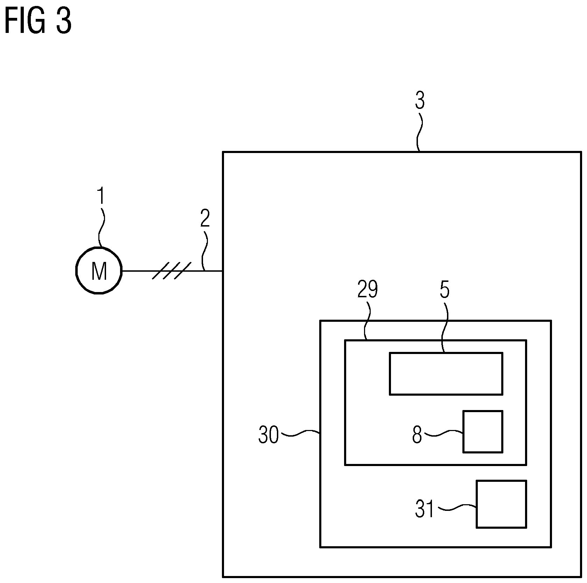

Die Darstellung nach FIG 3 zeigt eine Asynchronmaschine 1, welche über ein Stromkabel 2 von einem Stromrichter 3 speisbar ist. Der Stromrichter 2 weist eine Stromrichterregelung 30 auf. In diese ist ein Modell 5 integriert. Dieses Modell 5 betrifft beispielsweise ein Maschinenmodell (Motormodell) und/oder ein Temperaturmodell für die Maschine. Alternativ oder zusätzlich zum Temperaturmodell bzw. statt der Berechnung der Motorverluste können die Temperaturen der einzelnen Motormassen (Ständerwicklung, Läufer, Ständerblechpaket) gemessen werden. Die Temperaturen sind eine Art gefilterter Verluste. Je kälter ein Motor bei vorgegebenem Betriebszustand ist, desto energieoptimaler ist er. Eine Art Temperaturüberwachung der einzelnen Motorkomponenten mit untergelagerter Energieoptimierung ist auch vorstellbar.

Über eine Optimierungseinrichtung 29, in welche eine Auswahleinrichtung 8 integriert ist, dann eine Optimierung der Maschine erfolgen. Mit der Auswahleinrichtung 8 kann beispielsweise eine Optimierungsart eingestellt werden und/oder ein optimaler Fluss eingestellt (ausgewählt) werden. Die Optimierung betrifft insbesondere eine Optimierung des Wirkungsgrades. Dafür wird insbesondere aus berechneten Werten für Maschinenverluste bei unterschiedlich gewählten magnetische Flusswerten eine Kurve durch diese Werte gelegt und der Wert für den Fluss ausgewählt, bei welchem die mathematisch erzeugte Kurve ein Minimum aufweist. Zur Aktivierung der Optimierung ist eine Aktivierungseinrichtung 31 vorgesehen.

Der optimale Betriebspunkt der Asynchronmaschine, bzw. ein diesem nahekommender Betriebspunkt, befindet sich dort, wo die vom thermischen Motormodell berechneten Verluste am kleinsten sind. Aufbauend auf dieser Tatsache kann eine Suchfunktion für den einzustellenden Fluss realisiert werden. In einem stationären Zustand der Asynchronmaschine kann vor einer realen Änderung des Flusses, also vor einer Änderung des Sollwertes für den Fluss, ausgerechnet werden, ob sich eine Flussbetragsänderung in eine angenommene Richtung (z.B. Erhöhung des Flusses bzw. Reduzierung des Flusses) positiv oder negativ auf den Wirkungsgrad auswirken würde. Der Flussbetragssollwert wird dann entsprechend geändert.

Die Berechnung geht von dem vorgegebenen Lastzustand aus, damit die Drehzahl und das Drehmoment festgelegt sind. Dazu kommt noch der angenommene Flussbetrag. Der Flussbetrag legt durch die Sättigungskennlinie den I_sd fest. Der I_sq kann aus Flussbetrag und Drehmoment berechnet werden. Der Schlupf ergibt sich aus dem Rotorwiderstand, dem Querstrom und dem Flussbetrag. Damit ergibt sich auch die Ständerfrequenz. Damit sind alle Größen für das thermische Motormodell bekannt und die Motorverluste können eindeutig berechnet werden.

Der berechnete optimale Fluss wird beispielsweise zwischen 50% und 120% eingegrenzt. In der Regelung des Stromrichters für die Asynchronmaschine kann der berechnete optimale Fluss beispielsweise voll, nicht oder gleitend berücksichtigt werden. So kann beispielsweise zwischen einer Funktion zur Wirkungsgradoptimierung und einer Verlustoptimierung gewechselt werden, wobei die jeweilige Optimierung voll, nicht oder teilweise wirkt, bzw. ein gleitender Übergang zwischen den Optimierungsvarianten erfolgt.

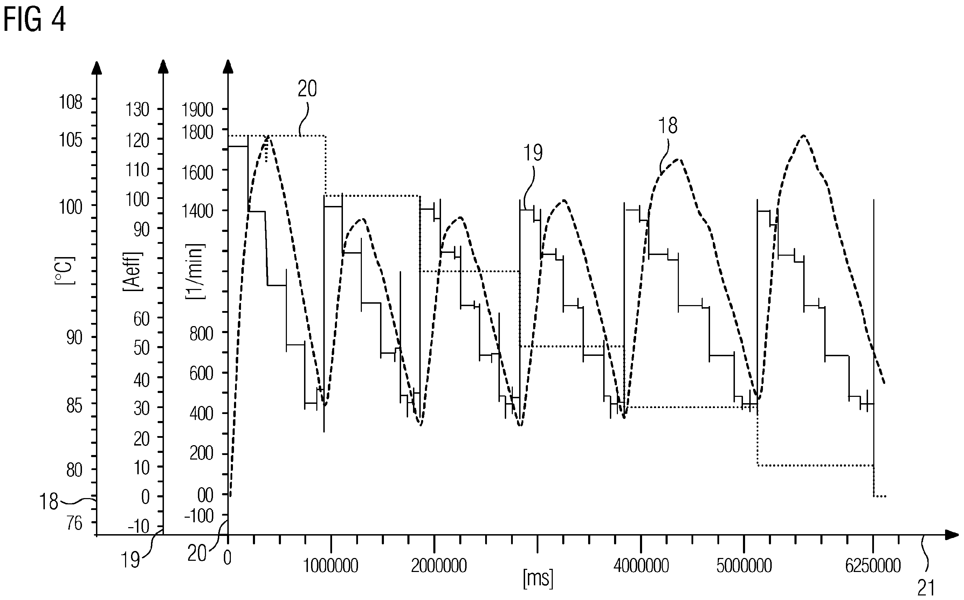

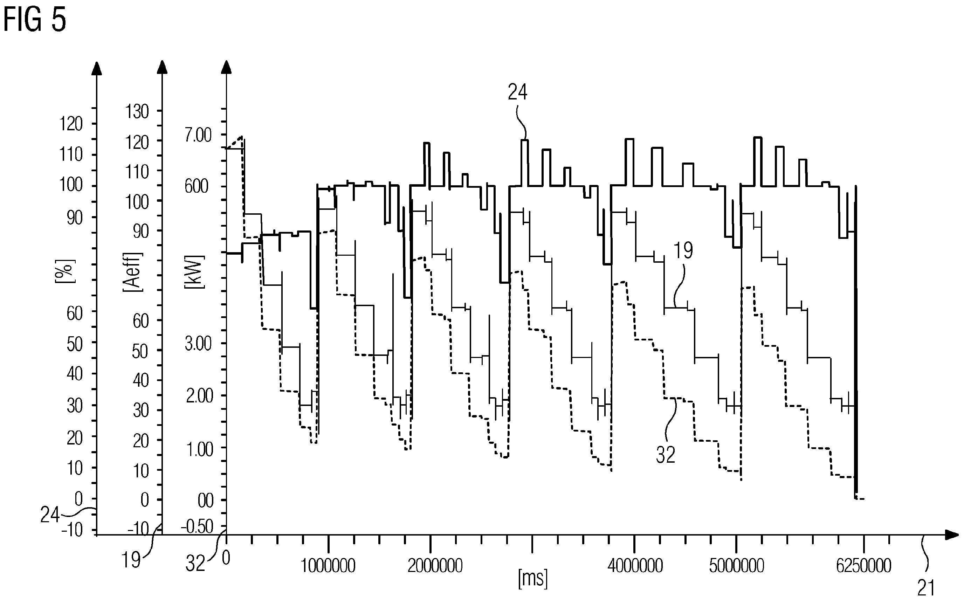

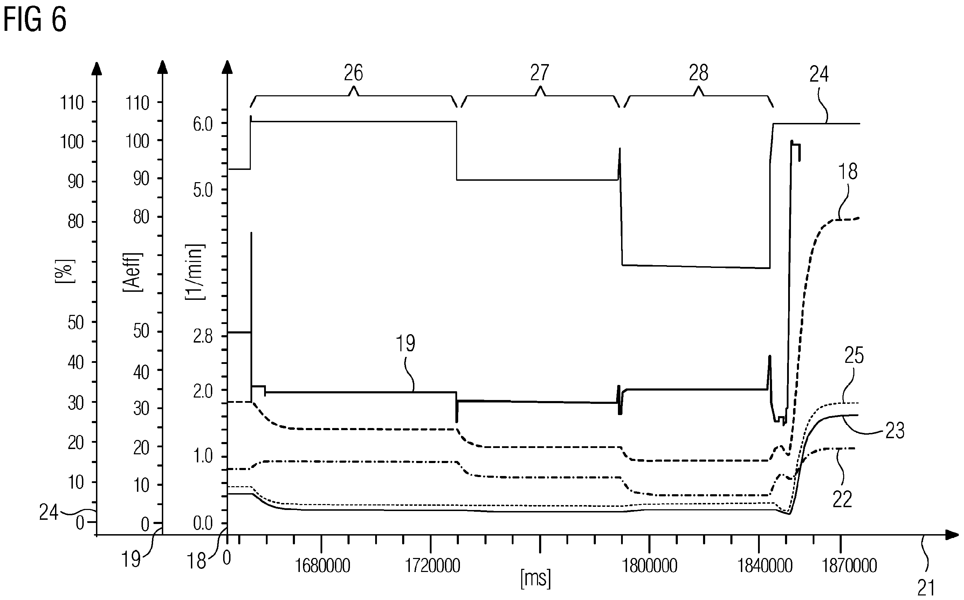

Die Darstellungen nach den Figuren 4, 5 und 6 zeigen Graphen für Messwerte bei einer Asynchronmaschine. FIG 4 zeigt Messwerte für Drehzahl, Strom und Motortemperatur. FIG 5 zeigt Messwerte für den Fluss und eine errechnete Verlustleistung. FIG 6 zeigt einen Vergleich verschiedener Optimierungen der Asynchronmaschine.

Für die Messwertaufnahme der Figuren 4 und 5 wurden 30 Lastpunkte (sechs verschiedene Drehzahlen, fünf verschiedene Drehmomente) angefahren. In allen Lastpunkten wurden drei Messungen durchgeführt:

1. ohne Flussoptimierung
2. mit Wirkungsgradoptimierung (I_sd = I_sq)
3. mit Verlustoptimierung (der minimale Verlust ist optimal).

Während der Messung wurde auch die Temperatur der Ständerwicklung aufgenommen.

Beim Punkt 2 der obigen Aufzählung erfolgt die Optimierung der Asynchronmaschine in einem Regelungsmodus (sowohl Servo als auch Vektor) beispielsweise so, dass der Erregerstrom so eingestellt wird, dass sein Betrag dem drehmomentbildenden Strom entspricht ($I_d=I_q$ Verfahren). Dieses Verfahren reduziert den Fluss insbesondere bei kleinen Belastungen. Im Überlastbereich lässt es den Fluss unverändert. Das Verfahren $I_d=I_q$ berücksichtigt nur die ohmsche Verluste, so dass der optimale Betriebspunkt nicht erreicht werden kann.

Die Darstellung nach FIG 4 zeigt die Motortemperatur (Ständerwicklungstemperatur) 18, den Drehzahlistwert 19 (ungeglättet) und den Betrag des Stromistwertes 19 (geglättet) über die Zeit 21. Als Drehzahlen wurden von links nach rechts folgende Werte gewählt: n=120%, n=100%, n=75%, n=50%, n=30% und n=10%. Wenn der Flussbetrag nicht optimiert ist (jeweils die erste Messung) erreicht der Flussbetrag den erwarteten Wert von 100%, solange keine Feldschwächung stattfindet. Die "Wirkungsgradoptimierung" (jeweils die zweite Messung) wirkt nur durch Flussreduzierung und nur bei sehr kleinen Belastungen. Das Verfahren der Verlustoptimierung wirkt in dem Beispiel fast immer: Bei kleinen Belastungen mit Flussreduzierung, bei höheren Belastungen mit Flusserhöhung. Dabei wird die Gesamtverlustleistung fast immer reduziert. Wird die Asynchronmaschine im Bereich des Nennpunktes betrieben reduziert sich das Optimierungspotential, wenn die Maschine in etwa richtig ausgelegt ist.

In der Darstellung nach FIG 5 ist neben dem Betrag des Stromistwertes 19 (geglättet) auch der Flussistwert 24 (eingestellte Flussbetrag) und die berechnete Gesamtverlustleistung 32 bei den verschiedenen Verfahren:

    1. ohne Flussoptimierung
    2. mit Wirkungsgradoptimierung (I_sd = I_sq)
    3. mit Verlustoptimierung (der minimale Verlust ist optimal)

aufgetragen.

Im Überlastzustand ergibt sich, wie ersichtlich ist, eine Übermagnetisierung der Maschine, solange nicht die Spannungsgrenze wirkt. Weiterhin ist bei bestimmten Betriebszuständen zu beobachten, dass bei Anwendung der Verlustoptimierung (Punkt 3 von oben) bei der Flussreduzierung mehr Strom fließt als bei den anderen beiden Verfahren (Punkt 1 und 2 von oben). Die Gesamtverluste werden trotzdem reduziert. Durch die Flussreduzierung ist die Verringerung der Eisenverluste stärker als die Gesamterhöhung der Kupferverluste im Ständer und Rotor.

In der Darstellung nach FIG 6 wird auch wieder zwischen den drei Verfahren unterschieden:

    1. ohne Flussoptimierung in einer ersten Phase 26
    2. mit Wirkungsgradoptimierung (I_sd = I_sq) in einer zweiten Phase 27
    3. mit Verlustoptimierung (der minimale Verlust ist optimal) in einer dritten Phase 28.

Dargestellt sind ferner eine berechnete Verlustleistung für den Stator 22, eine berechnete Verlustleistung für die Statorwicklung 23, der Flussistwert 24 und eine berechnete Verlustleistung für den Rotor 25.

Die in den Figuren gezeigten Graphen lassen erkennen, dass der aus den gemessenen Größen berechnete Wirkungsgrad bei den unterschiedlichen Belastungszuständen und den unterschiedlichen Optimierungen unterschiedlich ist. Verbesserungen können insbesondere bei kleineren Drehzahlen bzw. im Teillastbereich erreicht werden.

**Patentansprüche**

1. Verfahren zur Ermittlung eines Flusses (4) einer Asynchronmaschine (1), wobei der Fluss (4) in Abhängigkeit eines Verlustes (7) der Asynchronmaschine (1) eingestellt wird.

2. Verfahren nach Anspruch 1, wobei der Verlust (7) mittels eines Modells (5) ermittelt wird.

3. Verfahren nach Anspruch 2, wobei das Modell (5) ein thermisches Modell (5) aufweist.

4. Verfahren nach einem der Ansprüche 1 bis 3, wobei der Fluss (4) bei einem minimalen Verlust eingestellt wird.

5. Verfahren nach einem der Ansprüche 1 bis 4, wobei der Wirkungsgrad (6) optimiert ist.

6. Verfahren nach einem der Ansprüche 1 bis 5, wobei die Einstellung des Flusses (4) lastabhängig erfolgt.

7. Verfahren nach einem der Ansprüche 1 bis 6, wobei eine Änderung des Verlustes (7) abhängig von einer Änderung des Flusses (4) errechnet wird und der Fluss (4) in Abhängigkeit des errechneten Verlustes eingestellt wird.

8. Vorrichtung zur Bestimmung eines Flusses (4) einer Asynchronmaschine (1), mit einem Modell (5) zur Berechnung eines Verlustes (7) der Asynchronmaschine (1) abhängig vom Fluss der Asynchronmaschine und mit einer Auswahleinrichtung (8) zur Auswahl eines Flusses (7) abhängig vom Verlust.

9. Vorrichtung nach Anspruch 8, mit einer Aktivierungseinrichtung (31) für die Vorrichtung, abhängig von der Lastdynamik der Asynchronmaschine (1).

10. Vorrichtung nach Anspruch 8 oder 9, welche in einen Stromrichter integriert ist.

11. Vorrichtung nach einem der Ansprüche 8 bis 10, wobei mittels der Auswahleinrichtung zur Auswahl eines Flusses (4) der Wirkungsgrad der Asynchronmaschine (1) optimierbar ist.

12. Vorrichtung nach einem der Ansprüche 8 bis 11, welche zur Durchführung des Verfahrens nach einem der Ansprüche 1 bis 7 vorgesehen ist.

## FIG 1

# FIG 2

FIG 3

FIG 4

EP 3 462 600 A1

FIG 5

FIG 6

**Europäisches Patentamt**
**European Patent Office**
**Office européen des brevets**

# EUROPÄISCHER RECHERCHENBERICHT

Nummer der Anmeldung

EP 17 19 4133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 2 131 488 A1 (MITSUBISHI ELECTRIC CORP [JP]) 9. Dezember 2009 (2009-12-09)<br>* Zusammenfassung *<br>* Absätze [0024] - [0058] *<br>* Abbildungen 1-6 *<br>----- | 1,2,4-12<br>3 | INV.<br>H02P21/12<br>H02P21/02<br>H02P21/00 |
| Y | DE 10 2013 209347 A1 (BOSCH GMBH ROBERT [DE]; SAMSUNG SDI CO [KR]) 27. November 2014 (2014-11-27)<br>* Zusammenfassung *<br>* Absätze [0011] - [0024] *<br>* Ansprüche 6-8 *<br>----- | 3 | |
| X | EP 2 811 644 A1 (MITSUBISHI ELECTRIC CORP [JP]) 10. Dezember 2014 (2014-12-10)<br>* Zusammenfassung; Ansprüche 1, 3 *<br>* Absätze [0030] - [0036] *<br>----- | 1 | |
| X | DE 10 2014 213985 A1 (MAGNA POWERTRAIN GMBH & CO KG [AT]) 21. Januar 2016 (2016-01-21)<br>* Zusammenfassung *<br>* Absätze [0041] - [0048] *<br>----- | 1 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 9. März 2018 | Vanata, Daniela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                  
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 4133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2018

| Im Recherchenbericht angeführtes Patentdokument | Datum der Veröffentlichung | Mitglied(er) der Patentfamilie | Datum der Veröffentlichung |
|---|---|---|---|
| EP 2131488 A1 | 09-12-2009 | AT 548795 T | 15-03-2012 |
| | | CN 101622782 A | 06-01-2010 |
| | | EP 2131488 A1 | 09-12-2009 |
| | | ES 2384001 T3 | 28-06-2012 |
| | | JP 4956611 B2 | 20-06-2012 |
| | | JP WO2008107992 A1 | 10-06-2010 |
| | | US 2010087971 A1 | 08-04-2010 |
| | | WO 2008107992 A1 | 12-09-2008 |
| DE 102013209347 A1 | 27-11-2014 | KEINE | |
| EP 2811644 A1 | 10-12-2014 | CN 104081653 A | 01-10-2014 |
| | | EP 2811644 A1 | 10-12-2014 |
| | | JP 5586798 B2 | 10-09-2014 |
| | | JP WO2013115240 A1 | 11-05-2015 |
| | | US 2015028793 A1 | 29-01-2015 |
| | | WO 2013115240 A1 | 08-08-2013 |
| DE 102014213985 A1 | 21-01-2016 | DE 102014213985 A1 | 21-01-2016 |
| | | WO 2016008792 A1 | 21-01-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0019138 B1
- WO 2005018086 A1
- DE 4138066 B4
- DE 19524654 A1
- EP 0771067 B1